(19) Europäisches Patentamt
European Patent Office
Office européen des brevets

(11) **EP 2 368 133 B1**

(12) **FASCICULE DE BREVET EUROPEEN**

(45) Date de publication et mention de la délivrance du brevet:
**05.09.2012 Bulletin 2012/36**

(51) Int Cl.:
**G01S 5/12** *(2006.01)*          **G01S 3/74** *(2006.01)*
**G01S 5/02** *(2010.01)*

(21) Numéro de dépôt: **09796674.1**

(22) Date de dépôt: **11.12.2009**

(86) Numéro de dépôt international:
**PCT/EP2009/067000**

(87) Numéro de publication internationale:
**WO 2010/072593 (01.07.2010 Gazette 2010/26)**

(54) **PROCEDE DE LOCALISATION PAR ESTIMATION MULTI-VOIES DES TDOA ET FDOA DES MULTI-TRAJETS D'UNE SOURCE AVEC OU SANS AOA**

VERFAHREN ZUM LOKALISIEREN MEHRERER STRAHLEN EINER QUELLE MIT ODER OHNE AOA DURCH MEHRKANALSCHÄTZUNG VON TDOA UND FDOA

METHOD FOR LOCATING MULTIPLE RAYS OF A SOURCE WITH OR WITHOUT AOA BY MULTI-CHANNEL ESTIMATION OF THE TDOA AND FDOA

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807403**

(43) Date de publication de la demande:
**28.09.2011 Bulletin 2011/39**

(73) Titulaire: **THALES**
**92200 Neuilly-sur-Seine (FR)**

(72) Inventeurs:
• **GERMOND, Cécile**
  **F-75006 Paris (FR)**
• **FERREOL, Anne**
  **F-92700 Colombes (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 3 863 257          US-A1- 2002 196 187**

• **BELANGER S P ED - INSTITUTE OF ELECTRICAL AND ELECTRONICS ENGINEERS: "Multipath TDOA and FDOA estimation using the EM algorithm" PLENARY, SPECIAL, AUDIO, UNDERWATER ACOUSTICS, VLSI, NEURAL NETWORKS. MINNEAPOLIS, APR. 27 - 30, 1993; [PROCEEDINGS OF THE INTERNATIONAL CONFERENCE ON ACOUSTICS, SPEECH, AND SIGNAL PROCESSING (ICASSP)], NEW YORK, IEEE, US, vol. 4, 27 avril 1993 (1993-04-27), pages 168-171, XP010110758 ISBN: 978-0-7803-0946-3**
• **ALEX MIKHALEV ET AL: "Passive emitter geolocation using agent-based data fusion of AOA, TDOA and FDOA measurements" INFORMATION FUSION, 2007 10TH INTERNATIONAL CONFERENCE ON, IEEE, PI, 1 juillet 2007 (2007-07-01), pages 1-6, XP031194018 ISBN: 978-0-662-45804-3**
• **MICHAELA C VANDERVEEN ET AL: "Joint Angle and Delay Estimation (JADE) for Multipath Signals Arriving at an Antenna Array" IEEE COMMUNICATIONS LETTERS, IEEE SERVICE CENTER, PISCATAWAY, NJ, US, vol. 1, no. 1, 1 janvier 1997 (1997-01-01), XP011010493 ISSN: 1089-7798**
• **YVON ERHEL ET AL: "An Operational HF System for Single Site Localization" MILITARY COMMUNICATIONS CONFERENCE, 2007. MILCOM 2007. IEEE, IEEE, PISCATAWAY, NJ, USA, 29 octobre 2007 (2007-10-29), pages 1-5, XP031232748 ISBN: 978-1-4244-1512-0 cité dans la demande**

## Description

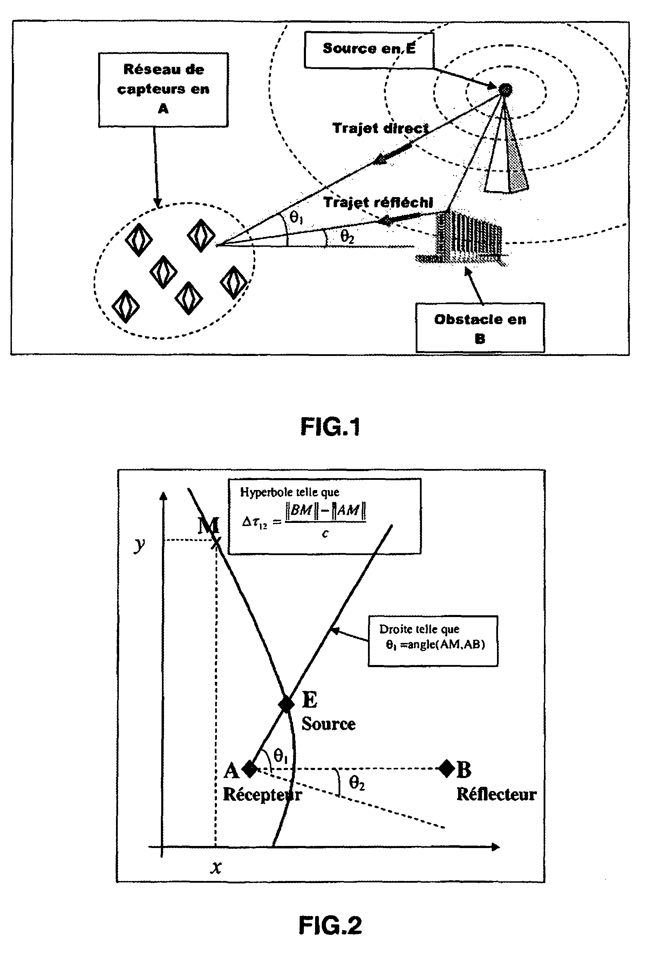

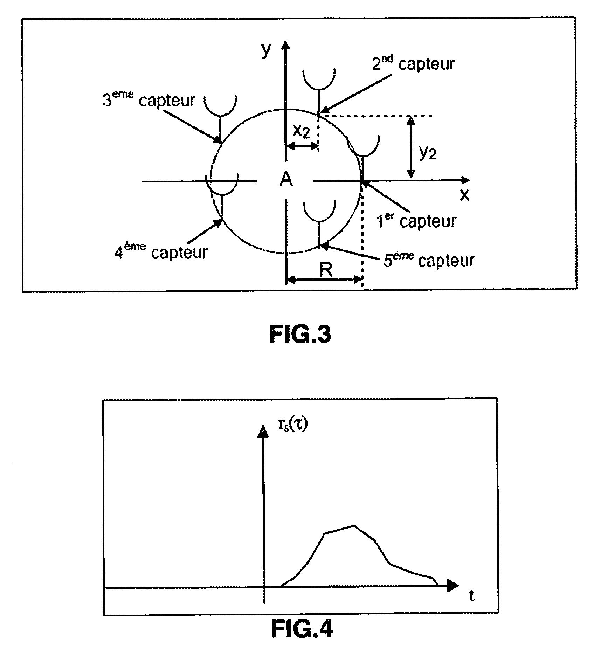

L'invention concerne un procédé de localisation en deux ou trois dimensions d'un émetteur en présence de multi trajets issus du trajet direct et d'une ou plusieurs réflexions sur des obstacles dont les positions sont connues. Les trajets sont reçus sur un unique système de réception multi voies, lui aussi de position connue. Le procédé selon l'invention est basé sur une méthode de traitement du signal. La figure 1 illustre un exemple de système de localisation comprenant une station de réception multi capteurs de position connue A qui reçoit un trajet direct et un trajet réfléchi sur un obstacle de position connue B. Les deux trajets reçus sont émis par une source E dont on cherche à localiser la position. La station de réception de position A reçoit le trajet direct de la source émettrice E sous une incidence $\theta_1$ et le trajet réfléchi sur l'obstacle localisé en B sous une incidence $\theta_2$. La localisation de l'émetteur nécessite d'une part une estimation de la différence de temps d'arrivée $\tau_2 - \tau_1$ entre le trajet direct et le trajet réfléchi et d'autre part une estimation de l'angle d'incidence $\theta_1$ du trajet direct. Ces deux problématiques sont couvertes d'une part par le domaine de l'estimation de différence de temps d'arrivée plus connue sous le terme anglo-saxon Time Difference Of Arrival (TDOA) et d'autre part le domaine de la goniométrie ou estimation d'angle d'arrivée, connue en anglais par l'expression Angle of Arrival (AOA). Dans la suite du texte, on parlera d'estimation TDOA et AOA. L'émetteur, les réflecteurs et le récepteur pouvant être fixes ou en mouvement, il est également nécessaire d'effectuer une estimation de la différence de fréquence d'arrivée des trajets ou en anglais Frequency Difference Of Arrival (FDOA). La figure 2 montre qu'en présence d'un trajet réfléchi, la localisation AOA/TDOA/FDOA d'un émetteur en E consiste tout d'abord à estimer les différences de temps d'arrivée $\Delta\tau_{12}$ entre le trajet direct et le trajet réfléchi pour former une hyperbole puis à estimer la direction $\theta_1$ du trajet direct pour former une droite. L'émetteur se trouve alors à l'intersection de la droite de direction $\theta_1$ et de l'hyperbole associée à $\Delta\tau_{12}$. En présence de plusieurs trajets réfléchis, l'émetteur se situe à l'intersection de plusieurs hyperboles et de la droite, rendant ainsi l'estimation AOA facultative. Sachant que la station de réception mise en oeuvre est composée de plusieurs capteurs, l'invention concerne également le domaine du traitement d'antenne. Dans un contexte électromagnétique les capteurs sont des antennes et les sources radio-électriques se propagent suivant une polarisation. Dans un contexte acoustique, les capteurs sont des microphones et les sources sont sonores. L'invention concerne, plus particulièrement, le domaine de la goniométrie ou estimation AOA qui consiste à estimer les angles d'arrivée des sources, une source faisant référence soit au trajet direct provenant de l'émetteur soit à un trajet réfléchi sur un obstacle. Les capteurs élémentaires du réseau reçoivent les sources avec une phase et une amplitude dépendant en particulier de leurs angles d'incidences et de la position des capteurs. La figure 3 représente un réseau de capteurs particulier de coordonnées respectives $(x_n, y_n)$. Les angles d'incidence sont paramétrés par l'azimut $\theta_m$ et l'élévation $\Delta_m$. Les techniques de traitement d'antenne ont pour principal objectif d'exploiter la diversité spatiale des signaux reçus sur le réseau d'antennes.

Le domaine de la localisation passive par des techniques TDOA est très vaste, on peut citer en particulier la méthode proposée par [1]. Cette dernière propose une mesure qui est effectuée à partir de signaux issus de plusieurs stations mono-voie. La source d'intérêt peut alors être localisée en deux dimensions par intersection d'hyperboles à l'aide d'au minimum trois récepteurs mono-voie. Cette technique fait appel à la résolution de systèmes d'équations non linéaires et recourt à une méthode de moindres carrés linéarisés nécessitant une initialisation proche de la position réelle de l'émetteur pour ne pas diverger. De plus, une synchronisation en temps de tous les récepteurs est nécessaire ainsi que l'utilisation d'un centre de fusion de données. Enfin cette technique est peu robuste en situation de multi trajets et en présence d'interférences. Les articles [2][3] proposent des techniques TDOA permettant de séparer les sources à partir d'une connaissance a priori de leurs caractéristiques cycliques.

Des techniques de localisation par mesures TDOA/FDOA ont été développées, en particulier celle citée dans [4] dans le cas où l'émetteur et/ou les récepteurs sont en mouvement. Cette méthode permet de réduire le nombre utile de récepteurs, mais nécessite toujours une synchronisation.

Le domaine de l'estimation et de la localisation AOA en présence de multi-trajets à partir d'une station de réception multi-voies est très vaste, on peut citer en particulier [5].

L'estimation conjointe AOA/TDOA a généré un grand nombre de références, on peut citer par exemple [6]. Contrairement aux méthodes d'estimation TDOA seul, les traitements effectués ici le sont avec des stations de réceptions multi-voies. Toutefois :

- l'objectif est de réaliser l'analyse paramétrique d'un canal à multi-trajets d'un seul émetteur **E₁** vers une station de réception multi-voies en **A₁**. Les paramètres estimés conjointement sont alors les angles d'arrivées $\theta_{11j}$ et les écarts en temps $\tau_{11j} - \tau_{11j'}$ entre les trajets de ce même émetteur du à des réflecteurs en **R$_j$** et **R$_{j'}$**.
- l'estimation conjointe des paramètres $(\theta_{11j}, \tau_{11j} - \tau_{11j'})$ est très souvent envisagée à partir de la connaissance d'un signal pilote.

Ainsi dans [6], les auteurs proposent une méthode pour estimer les angles d'arrivée et les retards des multi trajets corrélés d'une source reçus sur un réseau d'antennes. Le problème est modélisé par une matrice spatiotemporelle paramétrée par les angles et les retards recherchés. Le canal de propagation est tout d'abord estimé en aveugle ou à l'aide de séquence de référence, puis, les paramètres sont estimés. Cette technique a cependant l'inconvénient de faire des hypothèses sur le signal émis ; on suppose ainsi que le signal est numérique et modulé par une forme d'onde connue. D'autre part, il s'agit d'une méthode d'estimation de canal qui n'effectue pas la localisation de source.

L'état de l'art le plus proche de l'invention concerne les techniques de localisation à station unique (LSU) utilisées dans le cadre de transmissions Hautes Fréquences (HF). Le domaine de la LSU HF est très vaste, on peut citer par exemple la référence [7]. La localisation se fait à l'aide d'une seule station de réception multi-voie. La réception d'un trajet réfléchi sur la ionosphère, couplée à la connaissance du modèle de la ionosphère (altitudes des couches), permet de calculer la position de l'émetteur... Dans certaines approches, des retards de propagation sont estimés entre plusieurs trajets réfléchis sur les différentes couches de la ionosphère, s'affranchissant ainsi de la nécessité de connaître parfaitement le modèle de la ionosphère pour effectuer la localisation. Cependant, ces méthodes supposent alors que les réflexions sur les couches se font au milieu de la distance émetteur/récepteur. De plus l'inconvénient de ces méthodes est qu'elles supposent une connaissance a priori de la ionosphère.

L'invention propose de pallier aux restrictions de l'art antérieur en introduisant une solution de localisation d'une source à l'aide d'un unique système de réception multi voies ce qui a pour avantage d'éliminer les problèmes de synchronisation lorsque plusieurs récepteurs sont utilisés. De plus, le procédé mis en oeuvre selon l'invention se base sur l'utilisation de multi trajets réfléchis sur des obstacles de positions connues, maitrisables et situés sur la Terre et ne nécessite pas de connaissance particulière sur les caractéristiques du signal reçu par le système de réception. Enfin l'invention permet également de traiter le cas de la localisation en présence de signaux cyclo-stationnaires.

A cet effet, un des objets de la présente invention est d'offrir un procédé de localisation d'un émetteur E transmettant un signal vers un récepteur A comportant N voies (N≥1), les caractéristiques dudit signal étant inconnues du récepteur et ledit signal étant réfléchi sur P réflecteurs $B_1$ (P≥1) de positions connues caractérisé en ce qu'il comporte au moins les étapes suivantes :

➢ Etape 1 : une étape d'estimation/détection conjointe multi-voies des différences de temps d'arrivée ou TDOA $\tau_i$ et des différences de fréquence d'arrivée ou FDOA $f_i$ de chaque trajet réfléchi comprenant au moins les sous-étapes suivantes :

o Etape 1.1 : estimation de la matrice d'auto corrélation $\mathbf{R}_{xx}(\tau,f)$ du signal reçu par le récepteur A, en fonction des paramètres de temps $\tau$ et de fréquence f,
o Etape 1.2 : construction d'un critère normalisé

$$\hat{c}_{xx}(\tau,f) = 1 - \det\left(\mathbf{I}_N - \hat{\mathbf{R}}_{xx}(0,0)^{-1}\hat{\mathbf{R}}_{xx}(\tau,f)\hat{\mathbf{R}}_{xx}(0,0)^{-1}\hat{\mathbf{R}}_{xx}(\tau,f)^H\right)$$

,

où det est le déterminant d'une matrice, $I_N$ est la matrice identité à N lignes et N colonnes et $\hat{\mathbf{R}}_{xx}(\tau,f)$ est une estimée de la matrice d'auto corrélation $\mathbf{R}_{xx}(\tau,f)$ aux points $\tau$ et f,

○ Etape 1.3: calcul d'un seuil de détection $\eta(T,B) = \dfrac{\alpha\left(p_{fa}, 2N^2\right)}{2K}$ avec $K = B_{bruit}T$, où $\alpha(p_{fa}, 2N^2)$ est déterminé par une table de la loi du chi-2 pour une probabilité $p_{fa}$ et un nombre de degrés de libertés égal à $2N^2$.
○ Etape 1.4 : détermination des P couples TDOA/FDOA ($\tau_i$, $f_i$) qui vérifient les conditions suivantes :

■ $\hat{c}_{xx}(\tau_i,f_i) > \eta(T,B)$
■ $\hat{c}_{xx}(\tau_i,f_i)$ est un maximum local du critère $\hat{c}_{xx}(\tau,f)$,

➢ Etape 2 : une étape d'estimation angulaire de la direction $\theta_1$ du trajet direct du signal émis par une méthode de goniométrie,
➢ Etape 3 : une étape de localisation dans le plan de la position (x,y) de l'émetteur E à partir, au moins, des couples ($\tau_i$, $f_i$) ou des couples ($\tau_i$, $f_i$) et de la direction $\theta_1$, ladite étape 3 comportant au moins les sous -étapes suivantes :

○ Etape 3.1 : tracé des P branches d'hyperboles à partir de la connaissance des P couples TDOA/FDOA estimés ($\tau_i,f_i$) de chaque trajet réfléchi,
○ Etape 3.2 : tracé d'une droite passant par le récepteur A et ayant pour incidence l'angle $\theta_1$,

○ Etape 3.3 : détermination des coordonnées (x,y) de l'émetteur E par intersection d'au moins deux courbes parmi la ou les branches d'hyperboles déterminées à l'étape 3.1 et la droite déterminée à l'étape 3.2.

Selon un mode de réalisation la méthode de goniométrie de l'étape 2 s'applique à l'une des P matrices $R_{xx}(\tau_i, f_i)$ relative au trajet réfléchi sur le réflecteur $B_i$ et l'angle $\theta_1$ est l'angle formé par les droites $(AB_i)$ et $(AE)$.

Selon un mode de réalisation la méthode de goniométrie de l'étape 2 met en oeuvre une diagonalisation conjointe des P matrices $R_{xx}(\tau_i, f_i)$ et l'angle $\theta_1$ est l'angle entre la droite $(AE)$ et une droite de référence.

Selon un mode de réalisation la méthode de goniométrie de l'étape 2 est une méthode de type MUSIC.

Selon un mode de réalisation le procédé de localisation comporte une étape supplémentaire d'estimation de la coordonnée d'altitude z de l'émetteur E, ladite altitude z étant déterminée en fonction, au moins, d'une estimation de l'élévation $\Delta_1$ de l'émetteur E fournit par la méthode de goniométrie mise en oeuvre à l'étape 2.

Selon un mode de réalisation le nombre de trajets réfléchis P est supérieur ou égal à 3 et une étape supplémentaire d'estimation de la coordonnée d'altitude z de l'émetteur E est effectuée, ladite altitude z étant déterminée, au moins, par intersection des P hyperboloïdes déterminés à partir des P branches d'hyperboles obtenues à l'étape 3.1.

Selon un mode de réalisation le signal émis par l'émetteur est un signal cyclo stationnaire et l'étape 1 du procédé comporte en plus les étapes suivantes :

➢ Etape 1.5 : construction d'un gabarit de filtrage g(f) à partir de la coupe du critère $\hat{c}_{xx}(\tau, f)$ en $\tau = 0$,

➢ Etape 1.6 : suppression des lobes secondaires du critère en comparant, en chaque point de détection $(\tau, f)$ du critère, la valeur de $\hat{c}_{xx}(\tau, f)$ avec ledit gabarit g(f) centré en $\tau$ et en supprimant toute détection $(\tau, f')$ telle que la valeur du critère $\hat{c}_{xx}(\tau, f')$ est inférieure à g(f).

L'invention a également pour objet un système de localisation comprenant au moins un émetteur E, un ou plusieurs réflecteurs $B_i$ et une station de réception A, la dite station comportant plusieurs capteurs adaptés à recevoir un signal émis et une unité de traitement comportant des moyens pour exécuter les étapes du procédé tel que décrit précédemment.

D'autres caractéristiques et avantages du procédé et du dispositif selon l'invention apparaîtront mieux à la lecture de la description qui suit d'un exemple de réalisation donné à titre illustratif et nullement limitatif annexé des figures qui représentent :

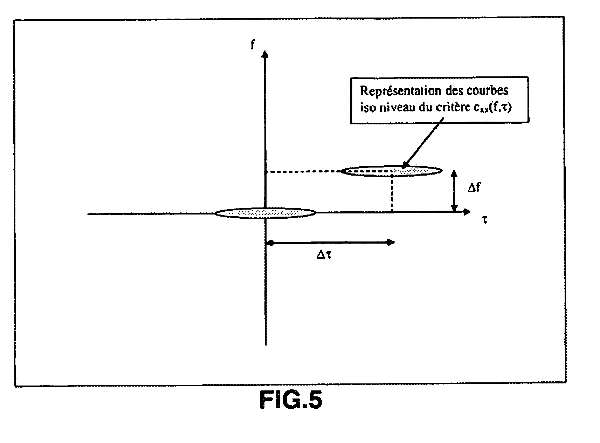

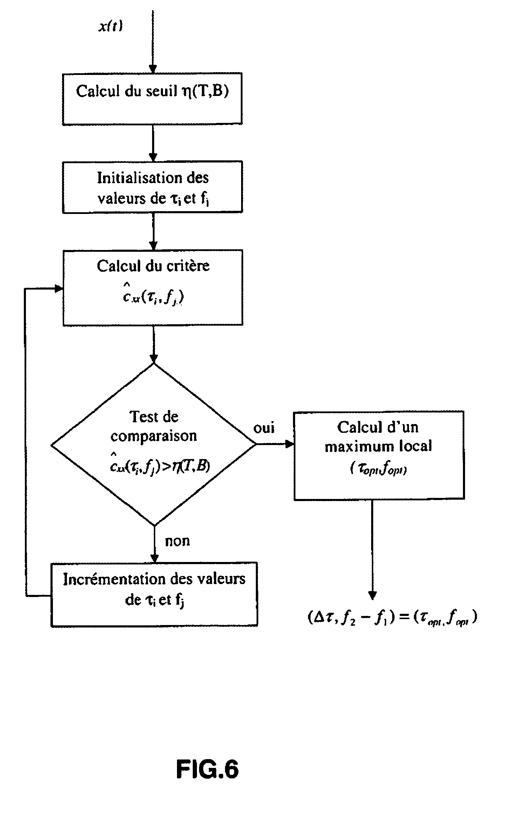

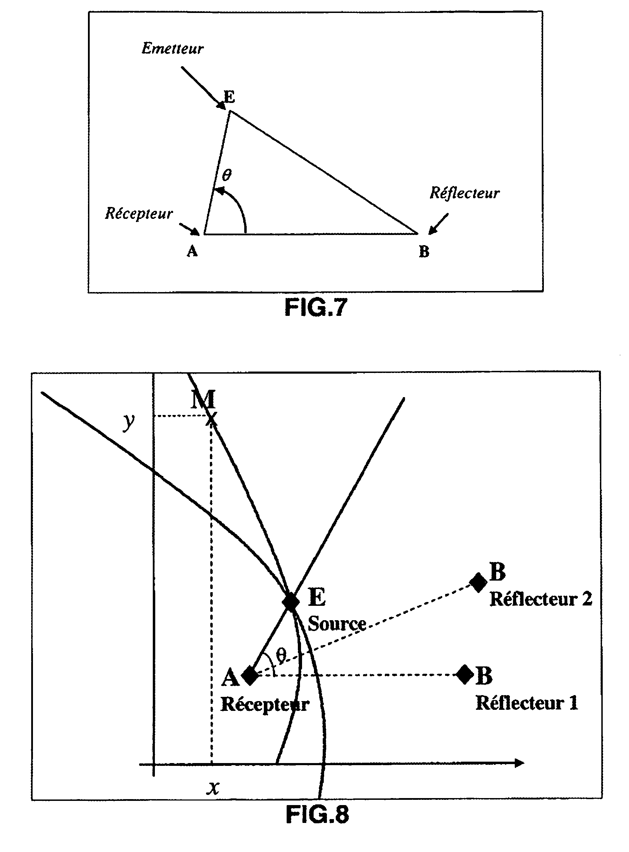

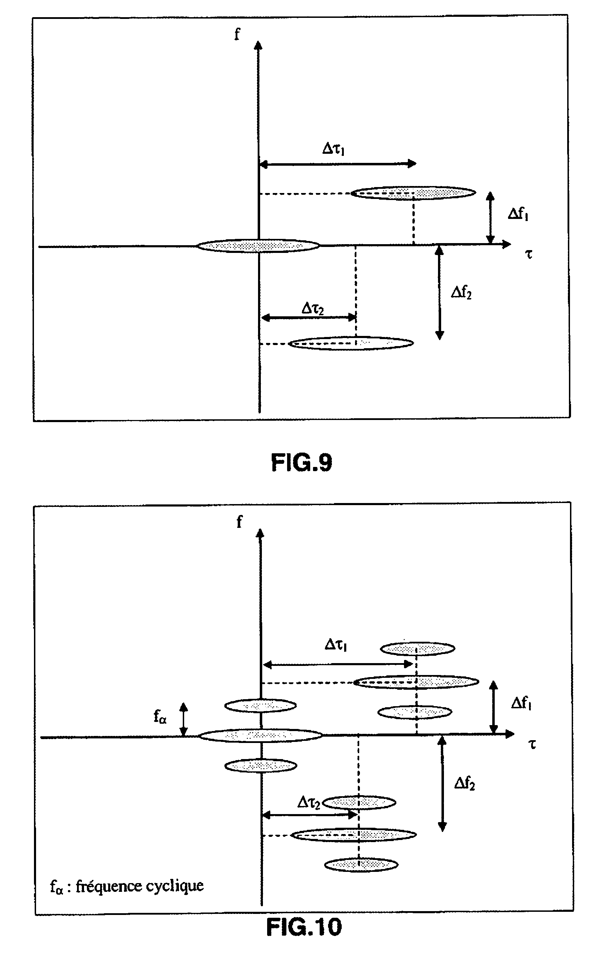

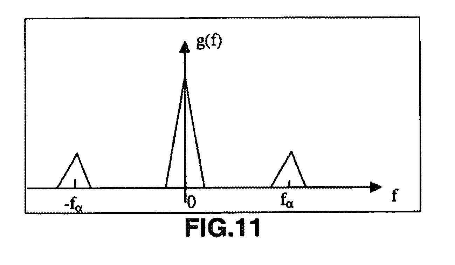

➢ La figure 1 un système de localisation comprenant un système de réception en A, une source émettrice en E et un obstacle réflecteur en B,
➢ La figure 2 une illustration d'une technique de localisation d'une source en E par interception d'une hyperbole et d'une droite,
➢ La figure 3 un exemple d'un réseau de capteurs de positions $(x_m, y_m)$,
➢ La figure 4 un exemple d'une fonction d'auto-corrélation à support temporel borné,
➢ La figure 5 un exemple de critère TDOA/FDOA en présence d'un trajet direct et d'un trajet réfléchi d'un signal stationnaire de fonction d'auto corrélation à support temporel borné,
➢ La figure 6 une illustration du procédé selon l'invention d'estimation TDOA/FDOA multi-voies par auto-corrélation,
➢ La figure 7 un schéma du principe de localisation d'un émetteur en E par une technique d'estimation TDOA,
➢ La figure 8 une illustration d'une technique de localisation d'une source en E par interception de deux hyperboles et d'une droite,
➢ La figure 9 un exemple de critère TDOA/FDOA en présence d'un trajet direct et de deux trajets réfléchis d'un signal de fonction d'auto corrélation à support temporel borné,
➢ La figure 10 un exemple de critère TDOA/FDOA en présence d'un trajet direct et de deux trajets réfléchis pour un signal cyclo-stationnaire de fonction d'auto corrélation à support temporel borné,
➢ La figure 11 un exemple de gabarit pour la suppression de détections secondaires dans le cas de signaux cyclo-stationnaires.

**Modélisation**

Le procédé selon l'invention concerne la localisation d'une source en présence d'un trajet direct et de P $\geq 1$ trajets décorrélés temporellement à l'aide d'un réseau de N capteurs élémentaires. Lesdits trajets proviennent d'une réflexion sur P obstacles de positions connues. La figure 1 illustre le cas d'un réseau de N=6 capteurs recevant le trajet direct et un trajet réfléchi d'une source. P=1 dans ce cas.

En présence d'une source avec P-1 trajets réfléchis, l'expression des signaux reçus par le réseau de capteurs s'écrit :

$$\mathbf{x}(t) = \begin{bmatrix} x_1(t) \\ \cdots \\ x_n(t) \\ \cdots \\ x_N(t) \end{bmatrix} = \sum_{p=1}^{P} \rho_p \ \mathbf{a}(\theta_p) \ \mathrm{s}_p(t - \tau_p) + \mathbf{n}(t) = \mathbf{A} \ \mathbf{s}(t) + \mathbf{n}(t) \qquad (1) \ .$$

$$s_p(t) = s(t) \exp(j 2\pi f_p t)$$

Où :

> $x_n(t)$ est le signal en sortie du n-ième capteur,
> $s(t)$ correspond au signal temporel émis par la source. Ce signal peut être stationnaire ou cyclo-stationnaire et sa fonction d'auto corrélation est à support temporel borné tel qu'illustré sur la figure 4.
> $\rho_p$, $\theta_p$, $\tau_p$ sont respectivement l'atténuation, la direction et le retard du p-ième trajet provenant de la source.
> $\mathbf{a}(\theta)$ est le vecteur directeur représentant la réponse du réseau de capteurs à une source de direction $\theta$
> $n(t)$ est le bruit additif, les composantes de bruit sont indépendantes entre voies de réception et ont pour puissance $\sigma^2$. Le bruit comporte également des interférences éventuelles. On suppose que n(t) suit une loi Gaussienne.
> $\mathbf{s}(t) = [S_1(t-\tau_1) \ldots Sp(t-\tau p)]^T$ est un vecteur comprenant le signal temporel du trajet direct et celui des trajets réfléchis.
> $\mathbf{A}$ est la matrice des vecteurs directeurs, $\mathbf{A} = [\mathbf{a}(\theta_1) \ldots \mathbf{a}(\theta_p)]$

Le terme TDOA fait référence à la différence de temps d'arrivée $\Delta\tau_p$ entre un trajet réfléchi et le trajet direct. Le terme FDOA fait référence à la différence de fréquence $\Delta f_p$ entre le trajet réfléchi et le trajet direct. $\Delta\tau_p = \tau_p - \tau_1$ et $\Delta f_p = f_p - f_1$ sont les TDOA et FDOA que l'invention propose d'estimer, avec $\tau_1$ et $f_1$ le temps d'arrivée et la fréquence du trajet direct. Le vecteur directeur $\mathbf{a}(\theta)$ dépend des positions $(x_n, y_n)$ des capteurs, tel que décrit à la figure 3, et s'écrit :

$$\mathbf{a}(\theta) = \begin{bmatrix} a_1(\theta) \\ \vdots \\ a_N(\theta) \end{bmatrix} \quad \text{avec} \ a_n(\theta) = \exp\left( j \frac{2\pi}{\lambda} \left( x_n \cos(\theta) + y_n \sin(\theta) \right) \right) \qquad (2) \ .$$

Le vecteur directeur $\mathbf{a}(\theta)$ est normalisé à $\sqrt{N}$ : $a(\theta).a(\theta)^H = N$.

Un des objectifs du procédé selon l'invention est de localiser la source à l'aide d'un réseau de N capteurs. L'estimation multi-voie des TDOA permet de construire des hyperboles sur lesquelles se situe la source. D'autre part, la direction d'arrivée du trajet direct de la source peut être estimée par des techniques de goniométrie. L'intersection des hyperboles et de la direction d'arrivée du trajet direct conduit à la localisation de la source tel qu'illustré à la figure 2.

Dans un mode de réalisation, le procédé permet une localisation en deux dimensions en prenant en compte un trajet direct et un trajet réfléchi pour des signaux stationnaires décorrélés présentant une fonction d'auto corrélation à support temporel borné.

Dans un autre mode de réalisation, le procédé permet également une localisation en trois dimensions, sous réserve de disposer de capteurs adaptés pour évaluer la direction d'arrivée du signal en azimut et en élévation.

Le cas où P≥1 trajets réfléchis sont utilisés est également pris en compte par le procédé, ainsi que le cas où les signaux sont cyclo-stationnaires.

**Localisation en présence d'un signal stationnaire comportant un trajet direct et un trajet réfléchi décorrélés**

Dans une première réalisation, le signal s(t) émis par la source est supposé stationnaire et de fonction d'auto corrélation à support temporel borné. Le réseau de capteurs reçoit deux trajets décorrélés temporellement (le trajet direct et un trajet réfléchi) présentant un décalage temporel $\Delta\tau$ et un décalage fréquentiel $\Delta f$. Le procédé de localisation de la source comporte les étapes suivantes :

Etape 1 : une phase d'estimation et de détection multi-voies des TDOA et FDOA,
Etape 2 : une phase d'estimation angulaire du trajet direct,

**Etape 3** : une phase de localisation de la source.

***Etape 1** : Estimation multi-voies des TDOA et FDOA*

Les paramètres à estimer sont le TDOA $\Delta\tau$ ainsi que le FDOA $\Delta f = f_2 - f_1$. Pour ce faire, il faut tout d'abord estimer la matrice d'auto corrélation suivante de dimensions (N,N) :

$$\mathbf{R}_{xx}(\tau, f) = \int_t E\left[\mathbf{x}(t)\mathbf{x}(t-\tau)^H\right]\exp(-j2\pi ft)\,dt \qquad (3)$$

La méthode consiste à rechercher le maximum de cette fonction et à comparer ce dernier à un seuil. En effet, en supposant que la forme d'onde du signal émis n'est pas ambigüe et que les deux trajets sont non corrélés, c'est-à-dire que les supports temporels de leurs fonctions d'auto corrélation sont disjoints, $\mathbf{R}_{xx}(\tau, f)$ présente un maximum local en $\tau = \Delta\tau$ et $f = f_2 - f_1$. La recherche et la détection du maximum de la fonction d'auto corrélation est équivalente à la recherche de la présence d'une source commune entre le trajet direct et le trajet réfléchi en $(\Delta\tau, f_2 - f_1)$.
La méthode d'estimation multi-voies du TDOA et du FDOA comporte les quatre sous-étapes suivantes :

**Etape 1.1 :** Estimation de la matrice d'auto corrélation

La première étape du procédé d'estimation TDOA/FDOA selon l'invention consiste à estimer la matrice d'auto-corrélation $\mathbf{R}_{xx}(\tau, f)$. Le signal $x(t)$ étant observé sur une durée $T=KT_e$ finie où $T_e$ est la période d'échantillonnage dudit signal et K un entier positif, on peut estimer la matrice de la façon suivante :

$$\hat{\mathbf{R}}_{xx}(\tau, f) = \frac{1}{K}\sum_{k=1}^{K}\mathbf{x}(kT_e)\mathbf{x}(kT_e - \tau)^H \exp(-j2\pi fkT_e) \qquad (4)\ .$$

**Etape 1.2 :** Construction du critère normalisé

Le critère normalisé suivant est construit à partir de l'estimée calculée à l'étape précédente :

$$\hat{c}_{xx}(\tau, f) = 1 - \det\left(\mathbf{I}_N - \hat{\mathbf{R}}_{xx}(0,0)^{-1}\hat{\mathbf{R}}_{xx}(\tau, f)\hat{\mathbf{R}}_{xx}(0,0)^{-1}\hat{\mathbf{R}}_{xx}(\tau, f)^H\right) \qquad (5)\ .$$

Le procédé consiste à évaluer ce critère bidimensionnel sur les couples de paramètres $(\tau_i, f_j)$ avec $\tau_i = i.\text{inc}\_\Delta\tau$ et $f_j = j.\text{inc}\_\Delta f$, où $\text{inc}\_\Delta\tau$ et $\text{inc}\_\Delta f$ sont des incréments dont la valeur est prédéfinie, et à le comparer à un seuil $\eta(T,B)$.
La figure 5 illustre une représentation dans le plan $(\tau, f)$ d'une coupe, pour une valeur de seuil donné, du critère $\hat{c}_{xx}(\Delta\tau, \Delta f)$

**Etape 1.3 :** Calcul du seuil

Le seuil $\eta(T,B)$ est basé sur la connaissance de la statistique du rapport de vraisemblance suivant :

$$\begin{aligned}V &= -2K\ln\left(1 - \hat{c}_{xx}(\tau, f)\right)\\ &= -2K\ln\left(\det\left(\mathbf{I}_N - \hat{\mathbf{R}}_{xx}(0,0)^{-1}\hat{\mathbf{R}}_{xx}(\tau, f)\hat{\mathbf{R}}_{xx}(0,0)^{-1}\hat{\mathbf{R}}_{xx}(\tau, f)^H\right)\right)\end{aligned} \qquad (6)\ .$$

Ce dernier suit une loi du chi-2 à $2N^2$ degrés de liberté en présence de bruit gaussien seul. En conséquence on considère que l'on a détecté un trajet réfléchi en $(\tau_i, f_j)$ lorsque :

$$-2K\ln\left(1 - \hat{c}_{xx}(\tau_i, f_j)\right) > \alpha\left(p_{fa}, 2N^2\right) \qquad (7)\ .$$

α(*proba,d*) est déterminé par une table du chi-2 pour une probabilité de *proba* et un nombre de degrés de libertés de *d*. Le seuil η(*T,B*) tel que $\hat{c}_{xx}$ (τ, *f*) ≤ ou η(*T,B*) a donc l'expression suivante :

$$\eta(T,B) = 1 - \exp\left(-\frac{\alpha\left(p_{fa}, 2N^2\right)}{2K}\right) \text{ avec } K = B_{bruit}T \qquad (8) \; .$$

Avec $p_{\text{fa}}$, une probabilité de fausse alarme donnée.
En supposant que le produit $K = B_{bruit}T$ est suffisamment grand, le seuil précédent devient :

$$\eta(T,B) = \frac{\alpha\left(p_{fa}, 2N^2\right)}{2K} \text{ avec } K = B_{bruit}T \qquad (9) \; .$$

**Etape 1.4 :** Détection/Estimation

La présence d'un trajet réfléchi en $(\tau_i, f_i)$ est détectée lorsque :

➢ $\hat{c}_{xx}(\tau_i, f_i) > \eta(T,B)$
➢ $\hat{c}_{xx}(\tau_i, f_i)$ présente un maximum local

La figure 6 schématise le procédé mis en oeuvre pour déterminer les estimées de TDOA/FDOA à partir du calcul du critère normalisé et du seuil de détection.
Dans une variante de réalisation, l'estimation du couple TDOA/FDOA $(\tau_i, f_i)$ peut être affinée par interpolation parabolique du critère $\hat{c}_{xx}(\tau,f)$.
L'étape suivante du procédé consiste à estimer l'angle d'arrivée du trajet direct.

***Etape 2*** *: Estimation angulaire (AOA)*

A l'issue de l'étape 1, on dispose des estimées de TDOA et FDOA $(\hat{\tau}_i, \hat{f}_i)$ du trajet réfléchi. Etant donné que les positions du récepteur et du réflecteur sont connues, et que les antennes ont été pré calibrées, le vecteur directeur **a** $(\theta_2)$ du trajet réfléchi est également connu. L'estimation angulaire consiste alors à estimer la direction d'arrivée $\theta_1$, du trajet direct (azimut de la source). Dans une variante de réalisation, si les antennes de la station de réception sont adaptées à traiter des signaux en trois dimensions, l'étape 2 du procédé consistera également à estimer l'élévation $\Delta_1$ de la source qui émet le trajet direct.

**Etape 2.1 :** Estimation de la direction d'arrivée du trajet direct

Le procédé consiste à utiliser une méthode de goniométrie pour estimer la direction d'arrivée du trajet direct. Une méthode connue de l'Homme du métier, pouvant s'appliquer ici est la méthode MUSIC ,telle que décrite dans [8], qui utilise la matrice d'auto corrélation $\mathbf{R}_{xx}(\tau,f)$ au point de détection précédemment déterminé $(\hat{\tau}_i, \hat{f}_i)$.
Sachant que la matrice est modélisée par :

$$\mathbf{R}_{xx}\left(\hat{\tau}_i, \hat{f}_i\right) = \mathbf{a}(\theta_1)\, r_s(0,0)\mathbf{a}(\theta_2)^{\mathbf{H}} \, ,$$

où $r_s(\tau,f)$ est la fonction d'auto corrélation du signal s(t). Il suffit d'appliquer la méthode MUSIC sur $\mathbf{R}_2 = \mathbf{R}_{xx}(\tau_i, f_i)\mathbf{R}_{xx}(\tau_i, f_i)^H$ en supposant la présence d'une seule source.
D'autres méthodes de goniométrie peuvent, bien entendu, être envisagées.
Dans le cas où les antennes du récepteur sont adaptées à traiter des signaux en trois dimensions, on peut utiliser une méthode de goniométrie permettant également d'estimer l'élévation du trajet direct.
La dernière étape du procédé selon l'invention consiste à utiliser les estimées des TDOA, FDOA et AOA (azimut et éventuellement élévation) afin de localiser la source.

*Etape 3* : *Localisation de la source*

Dans le cas où les traitements sont faits en deux dimensions, la source est localisée par l'interception d'une hyperbole avec une droite. L'hyperbole est construite à partir de l'estimée de TDOA (Etape 1) tandis que la droite est obtenue à partir de l'estimation angulaire de la source (Etape 2).

**Etape 3.1 :** Tracé de la branche d'hyperbole

La figure 7 schématise le principe de localisation d'un émetteur de position E via l'estimation du TDOA en présence d'un récepteur de position A et d'un réflecteur de position B.
$\|\mathbf{BA}\|$ est la distance entre les points A et B. La distance $D=\Delta\tau^{*}c$, où c est la célérité, est calculée à partir de l'estimation de la différence de temps $\Delta\tau$ entre les deux trajets (TDOA). En conséquence le point E appartient à la courbe des points M(x,y) définie par l'équation suivante :

$$D = \|\mathbf{MB}\| + \|\mathbf{BA}\| - \|\mathbf{MA}\| \qquad (10)$$

Où le point M de coordonnées (x,y) est l'un des points de cette courbe. Lesdites coordonnées vérifient :

$$x = x_A + \frac{D\left(D - 2\|\mathbf{BA}\|\right)}{2\left(\|\mathbf{BA}\|\left(1 - \cos\left(\theta\right)\right) - D\right)}\cos\left(\theta\right) \ \text{et}$$

$$y = y_A + \frac{D\left(D - 2\|\mathbf{BA}\|\right)}{2\left(\|\mathbf{BA}\|\left(1 - \cos\left(\theta\right)\right) - D\right)}\sin\left(\theta\right) \qquad (11)$$

Où $(x_A, y_A)$ sont les coordonnées du point A. La figure 2 donne un exemple d'hyperbole pour la localisation du point E dont les équations sont données en (10) et (11).
Dans le cas où l'on cherche à effectuer une localisation de la source en trois dimensions, l'étape 3.1 vise alors à construire une branche d'hyperboloïde et non plus d'hyperbole. Cette branche d'hyperboloïde peut s'obtenir de façon semblable au cas décrit pour la localisation en deux dimensions, et ce à partir de la seule valeur de l'estimée de TDOA.

**Etape 3.2 :** Tracé de la droite

Cette sous étape consiste à tracer la droite passant par le récepteur et formant l'angle $\hat{\theta}_1$ avec la droite reliant le récepteur au réflecteur tel qu'illustré à la figure 2. Dans le cas de la localisation 3D, la droite est définie par les angles d'azimut $\hat{\theta}_1$ et d'élévation $\Delta_1$.

**Etape 3.3 :** Localisation de la source

Cette dernière étape permet d'obtenir la position de la source par l'intersection entre l'hyperbole déterminée à l'étape 3.1 et la droite déterminée à l'étape 3.2.
Dans une variante de réalisation, lorsque la localisation est effectuée en trois dimensions, la position de la source est, en plus, définie par l'élévation déterminée à l'étape 2.2.

**Localisation en présence d'un signal stationnaire comportant un trajet direct et P trajets réfléchis décorrélés**

Le procédé décrit précédemment peut être étendu à un mode de réalisation où plusieurs (P) trajets réfléchis décorrélés sont reçus par la station de réception. Le signal considéré est toujours stationnaire et sa fonction d'auto corrélation est à support temporel borné.
Les étapes du procédé sont fonctionnellement identiques au cas décrit précédemment (un seul trajet réfléchi) :

*Etape 1* : *Estimation multi-voies des TDOA et FDOA des P trajets réfléchis*

En présence de P>1 trajets réfléchis décorrélés et un trajet direct, pour $\tau>0$, f>0 la matrice $\mathbf{R}_{xx}(\tau,f)$ présente

des maximums locaux aux points $(\tau_i, f_i)$, $i \in [1,P]$. La méthode précédemment explicitée pour un trajet réfléchi reste valable afin d'estimer les TDOA/FDOA de chacun des P trajets réfléchis. A cet effet les sous étapes 1.1, 1.2, 1.3 et 1.4 sont mises en oeuvre telles que décrites précédemment. La figure 9 illustre une représentation dans le plan $(\tau,f)$ d'une coupe, pour une valeur de seuil donné, du critère $\hat{c}_{xx}(\Delta\tau,\Delta f)$ pour le cas ou P=2 trajets réfléchis sont considérés. Les maximums locaux déterminés aux points $(\Delta\tau_1,\Delta f_1)$ et $(\Delta\tau_2,\Delta f_2)$ correspondent aux deux trajets réfléchis, alors que le trajet direct présente un maximum local à l'origine (0,0).

*Etape 2* : Estimation angulaire du trajet direct.

A l'issue de l'étape 1 précédente, on dispose de P couples TDOA/FDOA $(\hat{\tau}_i,\hat{f}_i)$ des trajets réfléchis pour i variant de 1 à P. Etant donné que les positions du récepteur et des réflecteurs sont connues, et que l'antenne a été calibrée au préalable, on dispose des vecteurs directeurs $\mathbf{\hat{a}}(\theta^i_{MT})$ de tous les trajets réfléchis. L'estimation angulaire consiste alors à estimer la direction d'arrivée du trajet direct.

**Etape 2.1 bis :** Estimation de la direction d'arrivée en azimut $\theta_1$ du trajet direct

Le procédé consiste à utiliser une méthode de goniométrie pour estimer la direction d'arrivée du trajet direct. Par exemple, la méthode MUSIC peut être mise en oeuvre sur les P matrices $\mathbf{R}_{xx}(\tau,f)$ aux points de détection $(\hat{\tau}_i, \hat{f}_i)$. Sachant que les matrices sont modélisées par :

$$\mathbf{R}_{xx}(\hat{\tau}_i,f_i)=\mathbf{a}(\theta_1)r_s(0,0)\mathbf{a}(\theta^i_{MT})^H$$ où $\mathbf{a}(\theta^i_{MT})$ est le vecteur directeur du i$^{ème}$ trajet réfléchi. La méthode MUSIC est appliquée sur chaque matrice $\mathbf{R}_2 = \mathbf{R}_{xx}(\tau_i,f_i)\mathbf{R}_{xx}(\tau_i,f_i)^H$ en supposant la présence d'une seule source.

L'estimation de la direction d'arrivée du trajet direct peut alors se faire sur une seule des P matrices $\mathbf{R}_{xx}(\hat{\tau}_i,\hat{f}_i)$ (rendant l'étape 2.1 bis identique à l'étape 2.1 précédemment décrite) ou alors en effectuant une diagonalisation conjointe sur l'ensemble de ces P matrices, ce qui présente comme avantage d'obtenir une meilleure précision de la direction d'arrivée. Dans ce dernier cas, l'estimation de la direction d'arrivée du trajet direct se fait via l'estimation de l'angle $\theta_{TD}$ entre ledit trajet direct reliant la source au récepteur et un point de référence qui peut être, par exemple, le nord géographique.

**Etape 2.2 bis :** Estimation de la direction d'arrivée en élévation du trajet direct

Dans le cas où les antennes du récepteur sont adaptées à traiter des signaux en trois dimensions, une méthode de goniométrie peut également être appliquée afin d'estimer l'élévation du trajet direct. La méthode de goniométrie peut être, par exemple, une méthode MUSIC.

*Etape 3* : Localisation de la source

Afin de localiser la source (dans le plan ou l'espace), on dispose alors de P hyperboles à une branche correspondant aux P trajets réfléchis. De façon analogue au cas d'un seul trajet réfléchi, l'intersection de ces hyperboles et de la droite obtenue par estimation angulaire du trajet direct permet d'effectuer une localisation de la source dans le plan. En utilisant comme information supplémentaire, l'élévation de la source déterminée à l'étape 2.2, la localisation peut également se faire dans l'espace.
Les sous étapes similaires à celle du cas d'un trajet réfléchi unique sont mises en oeuvre :

**Etape 3.1 bis :** tracé des branches d'hyperboles pour une localisation en deux dimensions, ou des hyperboloïdes pour une localisation en trois dimensions.
**Etape 3.2 :** tracé de la droite correspondant à la direction du trajet direct. Cette étape est identique au cas d'un seul trajet réfléchi.
**Etape 3.3 bis :** Cette étape consiste à utiliser les différents éléments produits aux étapes précédentes pour estimer la position de la source dans le plan ou l'espace. Plusieurs variantes sont possibles :

➢ La localisation dans le plan par intersection des P hyperboles et de la droite. La figure 8 illustre ce cas pour P=2.
➢ La localisation dans le plan par intersection d'au moins 2 hyperboles parmi les P disponibles. Dans ce cas, l'étape 3.2 est facultative.
➢ La localisation dans l'espace par intersection des P hyperboloïdes et de la droite définie par l'estimation de l'azimut et de l'élévation du trajet direct.
➢ La localisation dans l'espace par intersection d'au moins 3 hyperboloïdes parmi les P disponibles (en supposant P>3). Dans ce cas l'étape 3.2 est également facultative.

**Localisation en présence d'un signal cyclo stationnaire comportant un trajet direct et P trajets réfléchis décorrélés, P>0**

Le procédé selon l'invention décrit précédemment prend comme hypothèse le cas de signaux stationnaires. Le procédé peut également être mis en oeuvre sur des signaux cyclo stationnaires en introduisant deux étapes supplémentaires.

De la même façon que précédemment, les trajets sont décorrélés et la fonction d'auto corrélation du signal est à support temporel borné.

La première étape d'estimation multivoie des TDOA/FDOA du ou des trajets réfléchis est similaire à l'étape 1 décrite précédemment. Les signaux étant maintenant supposés cyclo-stationnaires, leur fonction d'auto corrélation $\mathbf{R}_{xx}(\tau,f)$ et par conséquent le critère $\hat{c}_{xx}(\tau,f)$ présente des valeurs non nulles au niveau des fréquences cycliques du signal. La figure 10 donne un exemple de critère pour un signal cyclo-stationnaire en présence de P=2 trajets réfléchis et un trajet direct. Les étapes 1.1 à 1.4 peuvent donc conduire à la détection non seulement des couples TDOA/FDOA cherchés $(\hat{\tau}_i,\hat{f}_i)$ mais aussi des couples $(\hat{\tau}_i,\hat{f}_i - kf_\alpha)$ et $(\hat{\tau}_i,\hat{f}_i + kf_\alpha)$, k entier positif, correspondant aux pics secondaires où $f_\alpha$ est la fréquence cyclique du signal. Le procédé selon l'invention consiste alors à utiliser un gabarit pour supprimer les détections secondaires. Les deux étapes supplémentaires sont donc mises en oeuvre :

**Etape 1.5** : Construction du gabarit

La coupe du critère $\hat{c}_{xx}(\tau,f)$ en $\tau=0$ permet de construire un gabarit de filtrage g(f) en fonction de la fréquence. Le gabarit correspond alors à cette coupe majorée d'un facteur multiplicatif. La figure 11 donne un exemple de gabarit.

**Etape 1.6** : Suppression des détections secondaires

Le procédé selon l'invention consiste ensuite à comparer en chaque point de détection $(\tau,f)$ du critère, et suivant l'axe fréquentiel, la valeur de $\hat{c}_{xx}(\tau,f)$ avec le gabarit g(f) centré en $\tau$. Toute détection $(\tau, f')$ telle que la valeur du critère $\hat{c}_{xx}(\tau,f')$ est inférieure à g(f) est alors supprimée.

Les étapes suivantes d'estimation angulaire (étape 2) et de localisation en deux ou trois dimensions (étape 3) sont identiques à celles décrites précédemment.

L'invention a notamment pour application les dispositifs ayant pour objectif de localiser des émetteurs dans un contexte de propagation maitrisé. Par exemple, elle peut concerner la localisation d'émetteurs fixes ou portables en milieu urbain ou sub-urbain. L'invention peut également être mise en oeuvre dans le cadre d'un traitement associé à un radar passif dans le but de localiser une cible à partir de la connaissance d'une source émettrice de position connue telle qu'une antenne de Television Numérique Terrestre, par exemple. Dans ce cas, la cible joue le rôle de réflecteur, alors que l'émetteur a une position connue. Le procédé peut alors être appliqué en échangeant les rôles de l'émetteur et du réflecteur.

L'invention présente notamment les avantages suivants :

➢ Une localisation 2D ou 3D d'un émetteur est possible en utilisant une seule station de réception multi voies. La solution proposée ne nécessite pas d'effectuer une synchronisation temporelle entre plusieurs récepteurs,
➢ Les traitements effectués ne nécessitent pas d'information a priori sur le signal émis,
➢ Une méthode de goniométrie n'est pas nécessaire lorsque deux réflecteurs (en 2D) ou trois (en 3D) sont présents, rendant inutile toute phase de calibration de l'antenne.
➢ Le cas des signaux cyclo stationnaires est également pris en compte

## <u>Références</u>

[1] Drake, S; Dogancay, K, Geolocation by time difference of arrival using hyperbolic asymptotes, ICASSP'04, vol 2, pp ii-361-4

[2] Gardner, W.A.; Chen, C.-K. Signal-selective time-difference-of-arrival estimation for passive location of manmade signal sources in highly corruptive environments. I. Theory and method IEEE trans on SP vol 40 n˚5 mai 1992, pp 1168-1184

[3] Chen, C.-K.; Gardner, W.A. Signal-selective time-difference of arrival estimation for passive location of manmade signal sources in highly corruptive environments. II. Algorithms and performance IEEE trans on SP vol 40 n˚5 mai 1992, pp 1168-1184

[4] D.Musicki, W.Koch, Geolocation using TDOA and FDOA measurements, 11th International Conference on Information Fusion, 2008, pp 1-8

[5] RO. SCHMIDT, Multiple emitter location and signal parameter estimation, in Proc of the RADC Spectrum Estimation Workshop, Griffiths Air Force Base, New york, 1979, pp. 243-258.

[6] Van Der Veen, M, Papadias, C.B., Paulraj, A.J., Joint angle and delay estimation(JADE) for multipath Signals Arriving at an Antenna Array, IEEE Communications Letters vol. 1-1 (Jan. 1997), 12-14..

[7] Y.Bertel; F.Marie, An Operational HF System for Single Site Localization, IEEE 2007

[8] Optimality of high resolution array processing using the eigensystem approach Bienvenu, G.; Kopp, L.; Acoustics, Speech and Signal Processing, IEEE Transactions Volume 31, Issue 5, Oct 1983 Page(s):1235 - 1248

**Revendications**

1. Procédé de localisation d'un émetteur E transmettant un signal vers un récepteur A comportant N voies (N≥1), les caractéristiques dudit signal étant inconnues du récepteur et ledit signal étant réfléchi sur P réflecteurs $B_i$ (P≥1) de positions connues **caractérisé en ce qu'**il comporte au moins les étapes suivantes :

   ➢ Etape 1 : une étape d'estimation/détection conjointe multi-voies des différences de temps d'arrivée ou TDOA $\tau_i$ et des différences de fréquence d'arrivée ou FDOA $f_i$ de chaque trajet réfléchi comprenant au moins les sous-étapes suivantes :

   ○ Etape 1.1 : estimation de la matrice d'auto corrélation $\mathbf{R}_{xx}(\tau,f)$ du signal reçu par le récepteur **A**, en fonction des paramètres de temps $\tau$ et de fréquence f,
   ○ Etape 1.2 : construction d'un critère normalisé

$$\hat{c}_{xx}(\tau,f)=1-\det\left(\mathbf{I}_N-\hat{\mathbf{R}}_{xx}(0,0)^{-1}\hat{\mathbf{R}}_{xx}(\tau,f)\hat{\mathbf{R}}_{xx}(0,0)^{-1}\hat{\mathbf{R}}_{xx}(\tau,f)^H\right)$$

   , où det est le déterminant d'une matrice, $I_N$ est la matrice identité à N lignes et N colonnes et $\hat{R}_{xx}(\tau,f)$ est une estimée de la matrice d'auto corrélation $\mathbf{R}_{xx}(\tau,f)$ aux points $\tau$ et f,
   ○ Etape 1.3 : calcul d'un seuil de détection

$$\eta(T,B)=\frac{\alpha\left(p_{fa},2N^2\right)}{2K}$$

   avec $K = B_{bruit}T$, où $\alpha(p_{fa},2N^2)$ est déterminé par une table de la loi du chi-2 pour une probabilité $p_{fa}$ et un nombre de degrés de libertés égal à $2N^2$.
   ○ Etape 1.4: détermination des P couples TDOA/FDOA $(\tau_i,f_i)$ qui vérifient les conditions suivantes :

   ■ $\hat{c}_{xx}(\tau_i,f_i)>\eta(T,B)$
   ■ $\hat{c}_{xx}(\tau_i,f_i)$ est un maximum local du critère $\hat{c}_{xx}(\tau,f)$,

   ➢ Etape 2 : une étape d'estimation angulaire de la direction $\theta_1$ du trajet direct du signal émis par une méthode de goniométrie,
   ➢ Etape 3 : une étape de localisation dans le plan de la position (x,y) de l'émetteur E à partir, au moins, des couples $(\tau_i, f_i)$ ou des couples $(\tau_i, f_i)$ et de la direction $\theta_1$, ladite étape 3 comportant au moins les sous -étapes suivantes :

   ○ Etape 3.1 : tracé des P branches d'hyperboles à partir de la connaissance des P couples TDOA/FDOA

estimés ($\tau_i$,$f_i$) de chaque trajet réfléchi,

○ Etape 3.2 : tracé d'une droite passant par le récepteur A et ayant pour incidence l'angle $\theta_1$,

○ Etape 3.3 : détermination des coordonnées (x,y) de l'émetteur E par intersection d'au moins deux courbes parmi la ou les branches d'hyperboles déterminées à l'étape 3.1 et la droite déterminée à l'étape 3.2.

2. Procédé de localisation selon la revendication 1, **caractérisé en ce que** la méthode de goniométrie de l'étape 2 s'applique à l'une des P matrices $R_{xx}(\tau_i,f_i)$ relative au trajet réfléchi sur le réflecteur $B_i$ et l'angle $\theta_1$ est l'angle formé par les droites $(AB_i)$ et $(AE)$.

3. Procédé de localisation selon la revendication 1, **caractérisé en ce que** la méthode de goniométrie de l'étape 2 met en oeuvre une diagonalisation conjointe des P matrices $R_{xx}(\tau_i,f_i)$ et l'angle $\theta_1$ est l'angle entre la droite (AE) et une droite de référence.

4. Procédé de localisation selon la revendication 1, **caractérisé en ce que** la méthode de goniométrie de l'étape 2 est une méthode de type MUSIC.

5. Procédé de localisation selon l'une des revendications 1 à 4 **caractérisé en ce qu'**une étape supplémentaire d'estimation de la coordonnée d'altitude z de l'émetteur E est effectuée, ladite altitude z étant déterminée en fonction, au moins, d'une estimation de l'élévation $\Delta_1$ de l'émetteur E fournit par la méthode de goniométrie mise en oeuvre à l'étape 2.

6. Procédé de localisation selon l'une des revendications 1 à 5 **caractérisé en ce que** le nombre de trajets réfléchis P est supérieur ou égal à 3 et qu'une étape supplémentaire d'estimation de la coordonnée d'altitude z de l'émetteur E est effectuée, ladite altitude z étant déterminée, au moins, par intersection des P hyperboloïdes déterminés à partir des P branches d'hyperboles obtenues à l'étape 3.1.

7. Procédé de localisation selon l'une des revendications précédentes **caractérisé en ce que** le signal émis par l'émetteur est un signal cyclo stationnaire et que l'étape 1 dudit procédé comporte en plus les étapes suivantes :

➢ Etape 1.5 : construction d'un gabarit de filtrage g(f) à partir de la coupe du critère $\hat{c}_{xx}(\tau, f)$ en $\tau = 0$,

➢ Etape 1.6 : suppression des lobes secondaires du critère en comparant, en chaque point de détection ($\tau$,$f$) du critère, la valeur de $\hat{c}_{xx}(\tau,f)$ avec ledit gabarit g(f) centré en $\tau$ et en supprimant toute détection ($\tau$,$f'$) telle que la valeur du critère $\hat{c}_{xx}(\tau,f')$ est inférieure à g(f).

8. Système de localisation comprenant au moins un émetteur E, un ou plusieurs réflecteurs $B_i$ et une station de réception A, la dite station comportant plusieurs capteurs adaptés à recevoir un signal émis et une unité de traitement comportant des moyens pour exécuter les étapes du procédé selon les revendications 1 à 7.

**Claims**

1. A method for locating an emitter E transmitting a signal toward a receiver A comprising N channels (N≥1), the features of said signal being unknown to the receiver and said signal being reflected on P reflectors $B_i$ (P≥1) with known positions, **characterised in that** it comprises at least the following steps:

➢ step 1: a step of multiple channel joint estimation/detection of time differences of arrival (TDOA) $\tau_i$ and frequency differences of arrival (FDOA) $f_i$ of each reflected path comprising at least the following sub-steps:

○ step 1.1: estimating the auto-correlation matrix $R_{xx}(\tau, f)$ of the signal received by the receiver A as a function of the time $\tau$ and frequency f parameters;

○ step 1.2: constructing a standardised criterion

$$\hat{c}_{xx}(\tau,f) = 1 - \det\left(\mathbf{I}_N - \hat{\mathbf{R}}_{xx}(0,0)^{-1}\hat{\mathbf{R}}_{xx}(\tau,f)\hat{\mathbf{R}}_{xx}(0,0)^{-1}\hat{\mathbf{R}}_{xx}(\tau,f)^H\right),$$

where det is the determinant of a matrix, $I_N$ is the matrix identity with N lines and N columns and $\hat{R}_{xx}(\tau,f)$ is an estimate of the auto-correlation matrix $R_{xx}(\tau, f)$ at points $\tau$ and f;

○ step 1.3: calculating a detection threshold

$$\eta(T,B)=\frac{\alpha\left(p_{fa},2N^{2}\right)}{2K}.$$

with K = $B_{noise}T$, where $\alpha(p_{fa},2N^2)$ is determined by a table of the chi-2 law for a probability $p_{fa}$ and a number of degrees of freedom equal to $2N^2$;

○ step 1.4: determining the P TDOA/FDOA ($\tau_i$, $f_i$) pairs that verify the following conditions:

- ◾ $\hat{c}_{xx}(\tau_i,f_i)>\eta(T,B)$;
- ◾ $\hat{c}_{xx}(\tau_i, f_i)$ is a local maximum of the criterion $\hat{c}_{xx}(\tau,f)$;

➢ step 2: a step of angularly estimating the direction $\theta_1$ of the direct path of the signal emitted using a goniometry method;

➢ step 3: a step of locating in the plane the position (x, y) of the emitter E at least on the basis of the pairs ($\tau_i$, $f_i$) or of the pairs ($\tau_i$,$f_i$) and of the direction $\theta_1$, said step 3 comprising at least the following sub-steps:

○ step 3.1: plotting the P branches of hyperbolas on the basis of the knowledge of the estimated P TDOA/FDOA ($\tau_i$, $f_i$) pairs of each reflected path;
○ step 3.2: plotting a straight line passing through the receiver A and having as incidence the angle $\theta_1$;
○ step 3.3: determining coordinates (x, y) of the emitter E by the intersection of at least two curves from the one or more branches of hyperbola determined in step 3.1 and the straight line determined in step 3.2.

2. The locating method according to claim 1, **characterised in that** the goniometry method of step 2 is applicable to one of the P matrices $R_{xx}(\tau_i, f_i)$ relative to the path reflected on the reflector $B_i$ and the angle $\theta_1$ is the angle formed by the straight lines ($AB_i$) and (AE).

3. The locating method according to claim 1, **characterised in that** the goniometry method of step 2 implements a joint diagonalisation of the P matrices $R_{xx}(\tau_i,f_i)$ and the angle $\theta_1$ is the angle between the straight line (AE) and a reference straight line.

4. The locating method according to claim 1, **characterised in that** the goniometry method of step 2 is a method of the MUSIC type.

5. The locating method according to any one of claims 1 to 4, **characterised in that** an additional step of estimating the altitude coordinate z of the emitter E is carried out, said altitude z being determined at least as a function of an estimate of the elevation $\Delta_1$ of the emitter E provided by the goniometry method implemented in step 2.

6. The locating method according to any one of claims 1 to 5, **characterised in that** the number of reflected paths P is greater than or equal to 3 and that an additional step of estimating the altitude coordinate z of the emitter E is carried out, said altitude z at least being determined by the intersection of the P hyperboloids determined on the basis of the P branches of hyperbolas obtained in step 3.1.

7. The locating method according to any one of the preceding claims, **characterised in that** the signal emitted by the emitter is a cyclo-stationary signal and that step 1 of said method further comprises the following steps:

➢ step 1.5: constructing a filtering template g(f) on the basis of the division of the criterion $\hat{c}_{xx}(\tau, f)$ into $\tau = 0$;
➢ step 1.6: deleting the secondary lobes of the criterion by comparing, at each detection point ($\tau$, f) of the criterion, the value of $\hat{c}_{xx}(\tau, f)$ with said template g(f) centred on $\tau$ and by deleting any detection ($\tau$, f') such that the value of the criterion $\hat{c}_{xx}(\tau,f')$ is less than g(f).

8. A locating system comprising at least one emitter E, one or more reflectors $B_i$ and a receiving station A, said station comprising a plurality of sensors designed to receive an emitted signal and a processing unit comprising means for executing the steps of the method according to claims 1 to 7.

**Patentansprüche**

1. Verfahren zum Lokalisieren eines Senders E, der ein Signal an einen Empfänger A überträgt, N Kanäle (N≥1) aufweisend, wobei die Merkmale des Signals dem Empfänger unbekannt sind und das Signal an P Reflektoren $B_i$ (P≥1) bekannter Positionen reflektiert wird, **dadurch gekennzeichnet, dass** es mindestens die folgenden Schritte umfasst:

   ➢ Schritt 1: einen Schritt der gemeinsamen Mehrkanalschätzung/-detektion der Unterschiede der Ankunftszeit oder TDOA $\tau_i$ und der Unterschiede der Ankunftsfrequenzen oder FDOA $f_i$ jedes reflektierten Strahls, das mindestens die folgenden Unterschritte umfasst:

   ○ Schritt 1.1: Schätzung der Autokorrelationsmatrix $R_{xx}$ ($\tau$, f) des vom Empfänger A empfangenen Signals in Abhängigkeit der Parameter Zeit $\tau$ und Frequenz f,
   ○ Schritt 1.2: Konstruktion eines genormten Kriteriums

$$\hat{c}_{xx}(\tau,f) = 1 - \det\left(\mathbf{I}_N - \hat{\mathbf{R}}_{xx}(0,0)^{-1}\hat{\mathbf{R}}_{xx}(\tau,f)\hat{\mathbf{R}}_{xx}(0,0)^{-1}\hat{\mathbf{R}}_{xx}(\tau,f)^H\right),$$

   wobei det die Determinante einer Matrix ist, $I_N$ die Identitätsmatrix mit N Zeilen und N Spalten ist und $\hat{R}_{xx}$ $(\tau,f)$ eine Schätzung der Autokorrelationsmatrix $R_{xx}$ ($\tau$, $f$) mit den Punkten $\tau$ und f ist,
   ○ Schritt 1.3: Berechnung einer Detektionsschwelle

$$\eta(T,B) = \frac{\alpha\left(p_{fa}, 2N^2\right)}{2K}.$$

   mit $K = B_{Geräusch}T$, wobei $\alpha(\mathbf{p_{fa}}, \mathbf{2N^2})$ von einem Modell des chi-2-Gesetzes für eine Wahrscheinlichkeit $p_{fa}$ und eine Anzahl von Freiheitsgraden von gleich $2N^2$ bestimmt wird,
   ○ Schritt 1.4: Bestimmung der P-Paare TDOA/FDOA ($\tau_i$, $f_i$), die die folgenden Bedingungen überprüfen:

   • $\hat{c}_{xx}(\tau_i, f_i) > \eta(T, B)$
   • $\hat{c}_{xx}(\tau_i, f_i)$ ist ein lokales Maximum des Kriteriums $\hat{c}_{xx}(\tau, f)$,

   ➢ Schritt 2: einen Schritt der Winkelschätzung der Richtung $\theta_1$ des direkten Strahls des gesendeten Signals durch eine Goniometriemethode,
   ➢ Schritt 3: einen Schritt der Lokalisierung in der Positionsebene (x, y) des Senders E ausgehend von mindestens Paaren ($\tau_l$, $f_l$) oder Paaren ($\tau_i$, $f_i$) und der Richtung $\theta_1$, wobei der Schritt 3 mindestens die folgenden Unterschritte aufweist:

   ○ Schritt 3.1: Zeichnen der P Hyperboläste ausgehend von der Kenntnis der P geschätzten Paare TDOA/FDOA ($\tau_i$, $f_i$) jedes reflektierten Strahls,
   ○ Schritt 3.2: Zeichnen einer Geraden durch den Empfänger A mit einem Winkeleinfall $\theta_1$,
   ○ Schritt 3.3: Bestimmung der Koordinaten (x, y) des Senders E durch Überschneidung von mindestens zwei Kurven, zu denen die in Schritt 3.1 bestimmten Hyperboläste und die in Schritt 3.2 bestimmte Gerade gehören.

2. Lokalisierungsverfahren nach Anspruch 1, **dadurch gekennzeichnet, dass** die Goniometriemethode von Schritt 2 auf eine der P Matrixen $R_{xx}(\tau_i f_i)$ angewendet wird, die sich auf den am Reflektor $B_l$ reflektierten Strahl bezieht, und der Winkel $\theta_1$ der von den Geraden $(AB_i)$ und (AE) gebildete Winkel ist.

3. Lokalisierungsverfahren nach Anspruch 1, **dadurch gekennzeichnet, dass** die Goniometriemethode von Schritt 2 eine gemeinsame Diagonalisierung der P Matrixen $R_{xx}$ ($\tau_i$, $f_i$) umsetzt, und der Winkel $\theta_1$ der Winkel zwischen der Geraden (AE) und einer Bezugsgeraden ist.

4. Lokalisierungsverfahren nach Anspruch 1, **dadurch gekennzeichnet, dass** die Goniometriemethode von Schritt 2 eine Methode vom Typ MUSIC ist.

5. Lokalisierungsverfahren nach einem der Ansprüche 1 bis 4, **dadurch gekennzeichnet, dass** ein zusätzlicher Schritt der Schätzung der Höhenkoordinate z des Senders E durchgeführt wird, wobei die Höhe z mindestens in Abhängigkeit einer Schätzung der Erhöhung $\Delta_1$ des Senders E bestimmt wird, die von der in Schritt 2 umgesetzten Goniometriemethode geliefert wird.

6. Lokalisierungsverfahren nach einem der Ansprüche 1 bis 5, **dadurch gekennzeichnet, dass** die Anzahl der reflektierten Strahlen P größer oder gleich 3 ist und dass ein zusätzlicher Schritt der Schätzung der Höhenkoordinate z des Senders E durchgeführt wird, wobei die Höhe z mindestens durch Überschneidung der P Hyperboloide bestimmt wird, die ausgehend von den P Hyperbolästen bestimmt werden, die in Schritt 3.1 ermittelt wurden.

7. Lokalisierungsverfahren nach einem der vorangehenden Ansprüche, **dadurch gekennzeichnet, dass** das von dem Sender gesendete Signal ein zyklostationäres Signal ist und dass Schritt 1 des Verfahrens zusätzlich die folgenden Schritte aufweist:

> ➢ Schritt 1.5: Konstruktion einer Filterschablone g(f) ausgehend vom Schnitt des Kriteriums $\hat{c}_{xx}$ ($\tau$, $f$) in $\tau = 0$,
> ➢ Schritt 1.6: Unterdrückung der sekundären Keulen des Kriteriums durch Vergleich, in jedem Detektionspunkt ($\tau$, $f$) des Kriteriums, des Wertes von $\hat{c}_{xx}(\tau, f)$ mit der in $\tau$ zentrierten Schablone g(f) und durch Unterdrückung jeder Detektion ($\tau$, $f'$), so dass der Wert des Kriteriums $\hat{c}_{xx}(\tau, f')$ kleiner als g(f) ist.

8. Lokalisierungssystem, das mindestens einen Sender E, einen oder mehrere Reflektoren $B_i$ und eine Empfangsstation A umfasst, wobei die Station einen oder mehrere Sensoren aufweist, die imstande sind, ein gesendetes Signal zu empfangen, und eine Verarbeitungseinheit, die Mittel aufweist, um die Schritte des Verfahrens nach den Ansprüchen 1 bis 7 durchzuführen.

**FIG.1**

**FIG.2**

**FIG.3**

**FIG.4**

**FIG.5**

**FIG.6**

**FIG.7**

**FIG.8**

FIG.9

$f_\alpha$ : fréquence cyclique

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DRAKE, S ; DOGANCAY, K.** Geolocation by time difference of arrival using hyperbolic asymptotes. *ICASSP'04,* vol. 2, ii-361-4
- **GARDNER, W.A. ; CHEN, C.-K.** Signal-selective time-difference-of-arrival estimation for passive location of man-made signal sources in highly corruptive environments. *I. Theory and method IEEE trans on SP,* Mai 1992, vol. 40 (5), 1168-1184
- **CHEN, C.-K. ; GARDNER, W.A.** Signal-selective time-difference of arrival estimation for passive location of man-made signal sources in highly corruptive environments. *II. Algorithms and performance IEEE trans on SP,* Mai 1992, vol. 40 (5), 1168-1184
- **D.MUSICKI ; W.KOCH.** Geolocation using TDOA and FDOA measurements. *11th International Conference on Information Fusion,* 2008, 1-8
- **RO. SCHMIDT.** Multiple emitter location and signal parameter estimation. *Proc of the RADC Spectrum Estimation Workshop, Griffiths Air Force Base, New york,* 1979, 243-258
- **DER VEEN, M ; PAPADIAS, C.B. ; PAULRAJ, A.J.** Joint angle and delay estimation(JADE) for multipath Signals Arriving at an Antenna Array. *IEEE Communications Letters,* Janvier 1997, vol. 1-1, 12-14
- **Y.BERTEL ; F.MARIE.** An Operational HF System for Single Site Localization. *IEEE,* 2007
- **BIENVENU, G. ; KOPP, L.** Optimality of high resolution array processing using the eigensystem approach. *Acoustics, Speech and Signal Processing, IEEE Transactions,* Octobre 1983, vol. 31 (5), 1235-1248